(19) Europäisches Patentamt
European Patent Office
Office européen des brevets

(11) **EP 2 266 667 A1**

(12) **EUROPEAN PATENT APPLICATION**

(43) Date of publication:
**29.12.2010 Bulletin 2010/52**

(51) Int Cl.:
*A62B 1/12* (2006.01)    *A63G 31/00* (2006.01)
*B64D 23/00* (2006.01)

(21) Application number: **10251147.4**

(22) Date of filing: **24.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.06.2009 GB 0910998**
**24.03.2010 GB 1004867**

(71) Applicant: **Dropzone (UK) Limited**
**4 Everley Cottages**
**Iwerne Steepleton**
**Blandford DT11 8PT (GB)**

(72) Inventors:
• **Moriarty, Nicholas**
**Blandford**
**DT11 8PT (GB)**
• **Shaylor, Matthew John**
**Basingstoke**
**RG22 5PQ (GB)**

(74) Representative: **Hansford, Katherine Joy**
**Atkinson Wheller Ltd**
**St Brandon's House**
**27-29 Great George Street**
**Bristol BS1 5QT (GB)**

(54) **Regulated descender**

(57)    Regulating apparatus for a descender comprises a spool (40), a line (48) wound upon the spool (40) to be drawn off during a descent and a fan (44) or similar brake operative upon the spool to limit its speed of forward rotation and hence the rate of descent. The inertial retarding effect of the moment of inertia of the spool (40) is overcome by an electric motor (42) arranged to accelerate the spool (40) during an initial part of the descent. A free-wheeling tether (50) for the line (48) prevents overrun of the spool (40) from picking up the line (48) at the end of a descent. The motor (42) may be run in reverse to rewind the line 48 after a descent.

Fig 2

EP 2 266 667 A1

## Description

This invention concerns a descender regulated to control descent from a height.

A descender is a facility for recreational, educational, training or safety purposes. It comprises an elevated platform (which may form part of or be set upon a tower, a bridge, a crane cradle, a building or a tree etc) from which a user jumps, his fall being controlled by a brake operating on a line connected to the jumper by means of a harness. Typically the line is wound on a spool connected to a fan so that as the jumper descends the fan is rotated and the windage of the fan controls the rate of descent. We describe such an arrangement in our copending patent application EP 1996296, the contents whereof are hereby incorporated into the present application by reference.

If in such an arrangement the line rotates the fan at a constant speed, the windage air drag on the fan is similarly constant, and the jumper descends at a steady rate. However, particularly for a sporting or training facility, it is desirable to minimise the drag initially (to approximate to free fall) and increase it as the jumper nears the ground (to ensure a safe landing). In EP 1996296 we describe how this may be done by providing a spool tapered along its length, with the line being initially drawn off from a large diameter part so that initially the spool rotates very slowly, and so does the fan, whereby the braking force immediately after the user jumps is very slow. As the line unwinds it progresses to a lower diameter part of the spool, the spool speeds up and accordingly the braking force increases and the user's descent is slowed.

The arrangement of EP 1996296 has proved very successful and we have installed and operated many fan descenders of that kind. We have found, however, that for large descents (say ∼ 100m) the size of spool needed to accommodate the line is such that its inertia becomes a significant factor. Thus, even when the apparatus is arranged so that there is very little windage braking immediately after jumping, the spool is relatively slow to accelerate owing to its inertia, and thus the jump does not achieve the desired impression of free fall.

It is an object of the present invention to overcome this inertial drag. Thus according to a first aspect of the invention there is provided a descender including an elevated platform from which a user jumps, attached to a line, and regulating apparatus for regulating the user's descent from the platform, which regulating apparatus comprises a spool upon which the line is wound before the descent and from which the line is drawn off during the descent, thereby rotating the spool forwards, and a brake operative upon the spool to limit its speed of forward rotation and hence the rate of descent, **characterised in that** said descender includes drive means operative when enabled to accelerate the spool forwards during an initial part of the descent.

The descender preferably includes a platform monitor operatively connected to the drive means so that the drive means is not enabled unless the user is properly positioned on the platform. Preferably the platform monitor includes a gate and the drive means is not enabled unless the gate is closed behind the user. Preferably, too, the platform monitor includes a light curtain or other sensor extending across the platform and the drive means is not enabled unless such sensor detects the user.

The descender may include an abort control for disabling the drive means if a user fails to jump.

The regulating apparatus of the descender preferably comprises a spool, a line wound upon the spool to be drawn off during a descent of a load attached to the line thereby rotating the spool forwards and a brake operative upon the spool to limit its speed of forward rotation and hence the rate at which the load descends, **characterised in that** the apparatus includes drive means operative when enabled to accelerate the spool forwards during an initial part of the descent.

The drive means preferably comprises an electric motor connected to the spool and operative under the control of a servomechanism to accelerate the spool forwards for a first predetermined time period $t_1$.

The servomechanism is preferably so configured and arranged that the acceleration of the spool during the initial part of the descent is marginally less than $g/\pi D$ rev/s$^2$, where D is the diameter of the spool from which the line unwinds during the initial part of the descent. Having the initial acceleration of the spool *close to* $g/\pi D$ rev/s$^2$ provides a close approximation to a freefall descent; and as long as the initial acceleration is *less than* $g/\pi D$ rev/s$^2$ the line will remain taut, which is desirable for safety reasons. The acceleration of the spool during the initial part of the descent is therefore preferably less than $g/\pi D$ rev/s$^2$ but not less than $0.9g/\pi D$ rev/s$^2$.

The servomechanism may also be so configured and arranged that the first predetermined time period $t_1$ during which the spool is initially accelerated is substantially less than $\sqrt{(2h/g)}$ s, where h is the height of the descent. This is to ensure that the brake has adequate time to slow the descent after the drive means ceases to operate. The first time period $t_1$ may for instance be less than $\sqrt{(h/g)}$ s. Preferably the servomechanism is also so configured and arranged that the operation of the drive means is progressively reduced to zero over a time period $t_2$ after $t_1$. The time period $t_2$ may be approximately equal to the time period $t_1$.

Preferably the brake operates with a force related to the speed of rotation of the spool and the spool is formed with a fore section (from which the line unwinds first) of diameter D, a rear section (from which the line unwinds last) of relatively small diameter d and a tapered section between said fore section and said rear section. By this means, as the load descends its turning force on the spool decreases whereas the braking force remains high, and thus the spool (and the rate of descent of the load) is slowed. The line may be wound helically approximately N times on the fore section of the spool, where $N = g\,t_1{}^2/2\pi d$, with the effect that the line begins to unwind down the tapered section of the spool as the operation of the drive means begins to be reduced.

Preferably the drive means is automatically disabled during a descent if (a) the spool exceeds a predetermined rate of rotation or (b) the drive means attempts to drive the spool backwards or (c) the drive means is operative for longer than a predetermined time.

The brake may conveniently comprise a fan rotatable forwards with said spool, generally of the form described in EP 1996296.

The descender may include an elevated platform from which a user jumps and makes a controlled descent under the operation of the regulating apparatus.

The line of the regulating apparatus may have a tethered end connected to the spool and be wound helically on the spool from the tethered end towards a free end of the cable, said free end being connected to a harness for the user. In this arrangement the tethered end of the line preferably has a one-way locking connection with the spool such that at the bottom of the descent the spool may rotate free of the line, by which means overrun of the spool at the end of the descent does not cause the line to be wound back up upon the spool.

The descender preferably includes various safety features as follows. First, the descender preferably includes a main switch manually operable to switch the descender on. The descender preferably also includes a gate for controlling access to the platform **characterised in that** the drive means is operatively connected to said gate so as to be enabled only if the descender is on and the gate is closed. Further, the descender preferably includes a sensor for detecting a said user on the platform **characterised in that** the drive means is operatively connected to said sensor so as to be enabled only if the descender is on, the gate is closed and the sensor detects a user on the platform. Preferably, too, the drive means when enabled operates automatically as soon as said sensor detects that the user has left the platform. It is also preferred that the descender include an abort switch manually operable to cancel enablement of the drive means, and also an emergency switch manually operable to disable the drive means.

To prevent the descent from going astray, for instance because of winds, the harness of the descender may be slidingly connected to a guide rig extending downward from said platform to the bottom of the descent.

The drive means may be selectively operable to drive the spool backwards after a descent to return the harness to said platform.

Those skilled in the science will appreciate that the one-way connection between tether and spool mentioned above is not limited to any particular form of descender. Thus the invention extends to any facility for recreational, educational, training or safety purposes including an elevated platform from which a person descends on a line unwinding from a spool rotating forwardly about an axis, the line being of length equal to the height of the descent so that at the end of the descent the line is fully unwound from the spool and the descent being regulated by a brake acting on the spool, **characterised in that** the line is secured to a tether rotatable about said axis and having a one-way locking connection with the spool such that the spool can rotate without rotating the tether whilst the tether cannot rotate without rotating the spool.

The tether may be rotatable backwards to rotate the spool backwards and thereby rewind the line upon the spool. With this arrangement the tether preferably locks to the spool in only one relative orientation, and also the spool and the tether may each be formed with a helical channel for the wound line and the respective channels be mutually aligned in said one relative orientation.

Other features of the invention will be apparent from the following description, which is made by way of example only with reference to the accompanying schematic drawing in which -

Figure 1 is a diagrammatic front elevation of a previously known regulating apparatus for a descender;
Figure 2 is a diagrammatic front elevation of regulating apparatus for a descender according to the present invention;
Figures 3 and 4 are graphical representations of the operation of the regulating apparatus of Figure 2 showing respectively descent speed and descent distance with respect to time;
Figure 5 is a diagrammatic side elevation corresponding to Figure 2 as viewed at arrow A at the beginning of a descent;
Figure 6 is a diagrammatic side elevation corresponding to part of Figure 2 as viewed at B-B at the end of a descent;
Figure 7 is an isometric view of a descender including the regulating apparatus of Figure 2; and
Figure 8 is a flow chart illustrating the operation of the descender of Figure 7.

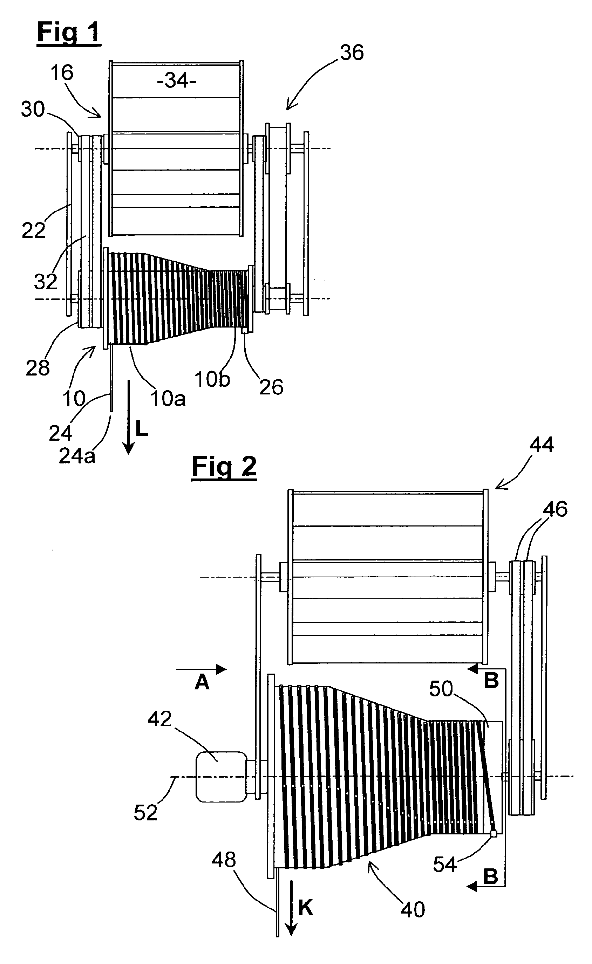

Referring first to Figure 1, the regulating apparatus shown therein is of the kind described in our copending patent application EP 1996296. This regulating apparatus comprises a spool 10 mounted on a spindle 12 to be rotatable about a first axis 14 and a fan 16 mounted on a spindle 18 to be rotatable about a second axis 20 parallel to the first axis 14. The spindles 12 and 18 extend between a pair of end plates 22 thereby forming a frame for the regulating apparatus. A line 24 having a free end 24a is wound helically upon the spool 10, its other end being secured to the spool 10 by a clamp 26. The line 24 is a braid of gel-spun polyethylene filaments with high strength, high modulus and low creep available under the registered trade mark Dyneema from DSM of The Netherlands.

Secured to one end (the left hand end as seen in Figure 1) of the spool 10 and rotatable about the spindle 12 is a first drive pulley 28. Secured to the left hand end of the fan 16 and rotatable therewith about the spindle 18 is a second drive pulley 30. A pair of drive belts 32 interconnect the pulleys 28 and 30 so that the fan 16 rotates when the spool 10 rotates. Although not so illustrated, the drive belts 32 are toothed belts and the pulleys 28 and 30 appropriately formed therefor. And also not shown, for simplicity of illustration, an idler wheel bears on each drive belt 32 and is movable arcuately to adjust the tension thereof.

When a load is applied to its free end 24a and allowed to fall downwards in the direction of arrow L, the line 24 is progressively drawn off the spool 10, causing the spool 10 to rotate (in what is herein termed a forward direction) about the spindle 12. The drive belts 32 then drive the fan 16 rotatably about the spindle 18 in the same direction of rotation as the spool 10 - that is, in the forward direction.

The fan 16 has a generally cylindrical periphery about the axis 20 with a plurality of vanes spaced around this periphery, a representative vane of such plurality being identified in the drawing by reference numeral 34. As the fan 16 is driven to rotate forwards it acts as a radial flow air impeller, giving rise to considerable windage. Thus the fan 16 acts as a brake upon the spool 10, retarding the forward rotation of the spool 10 and so regulating the movement of the load on the line 24.

It will be understood that the windage and hence the braking force on the line 24 depends upon the speed of rotation of the fan 16, and this is adjusted in use by forming the spool 10 with a relatively large diameter part and a relatively small diameter part and a taper from one part to the other (ie of reducing diameter towards the right as seen in Figure 1). Thus, as the line 24 is drawn off from the spool 10, it acts on a progressively smaller diameter as it unwinds along the taper 10a, thereby accelerating the spool 10. Initially, because the effective diameter of the spool 10 is relatively large, the rotation of the spool 10 is relatively slow, and therefore the rotation of the fan 16 is similarly slow and its windage braking force low. As the spool 10 accelerates, the fan 16 similarly accelerates, and the windage braking force increases. At the right hand end of spool 10, where its effective diameter is relatively small, the rotation of the spool 10 and hence the fan 16 is fast and the windage braking force is high.

It follows from the above that, when the load on the line 24 begins to fall, it initially accelerates quickly, because the braking force is small; and as the braking force increases, the rate of descent of the load is reduced. This fall profile means that a person harnessed to the line 24 in place of the load will initially experience something like free-fall followed by progressive deceleration to a safe landing speed. In short, a descender including the regulating apparatus of Figure 1 can provide an experience which is a fair simulation of a parachute jump and both exciting and safe.

The spool 10 needs to accommodate a length of line at least equal to the height of the jump, and in broad terms this will depend upon the length of the spool and its average effective diameter. The regulating apparatus of Figure 1 has been used in many installations with a jump of about 30m. For a substantially higher jump, the spool needs to be substantially bigger, of course, and this introduces a problem. Consider a jump of 90m. This length of line can be accommodated upon a spool which has a length 1.5 times that of the 30m spool and an average effective diameter 2 times that of the 30m spool. The problem arises from the very much greater moment of inertia of the larger spool. Moment of inertia of a body rotatable about an axis is proportional to its mass M times the square of the radial distance r of its mass (more precisely, of each element of its mass) from the axis of rotation. That is -

$$I \propto M \times r^2$$

The mass of a spool such as the spool 10 depends upon its length l and the square of its average radius r. That is -

$$M \propto l \times r^2$$

Accordingly -

$$I \propto l \times r^4$$

It follows that going up from a 30m spool to a 90m spool by doubling the average diameter and increasing the length 1.5 times may increase the moment of inertia as much as 24 times, since $1.5 \times 2^4 = 24$. A 90m spool of the same length as the 30m spool but 3 times the average diameter may have a moment of inertia 81 times greater, since $1 \times 3^4 = 81$. In practice the increase in moment of inertia will not be as precise as these figures suggest, being dependent upon the configuration of the spool; but increasing the dimensions of the spool, will necessarily bring a great increase in the moment of inertia. In practice there is almost always a limit to the increase in length which can be permitted, because the plane of deployment of the line moves along the spool as the line is drawn off, so the average diameter must be increased; and this has an extra effect because of the fourth power in the formula for moment of inertia.

The much greater inertia of the 90m spool means that it gains speed much less quickly than a 30m spool when acted on by a load such as the weight of a person and so detracts from the initial free-fall experience. The present invention counteracts this, as will now be described first with reference to Figure 2.

The spool 40 of Figure 2 has an average effective diameter nearly twice that of the spool 10 of Figure 1 and is nearly twice as long. Thus it can accommodate 110m of line (compared with 30m for the spool 10) but it also has a moment of inertia some 30 times that of the spool 10. To counteract the initially retarding effect of this large moment of inertia an electric motor 42 is provided to accelerate the spool 40 forwards for the initial part of the descent.

The electric motor 42 is arranged (as will be described in more detail hereinafter) to start as soon as a user jumps, to accelerate the spool 40 at a rate such that the user initially drops as indicated by arrow K at very nearly free-fall rate and then progressively to reduce its driving force as the fan 44 begins to brake the spool 40 connected to it by toothed belts 46.

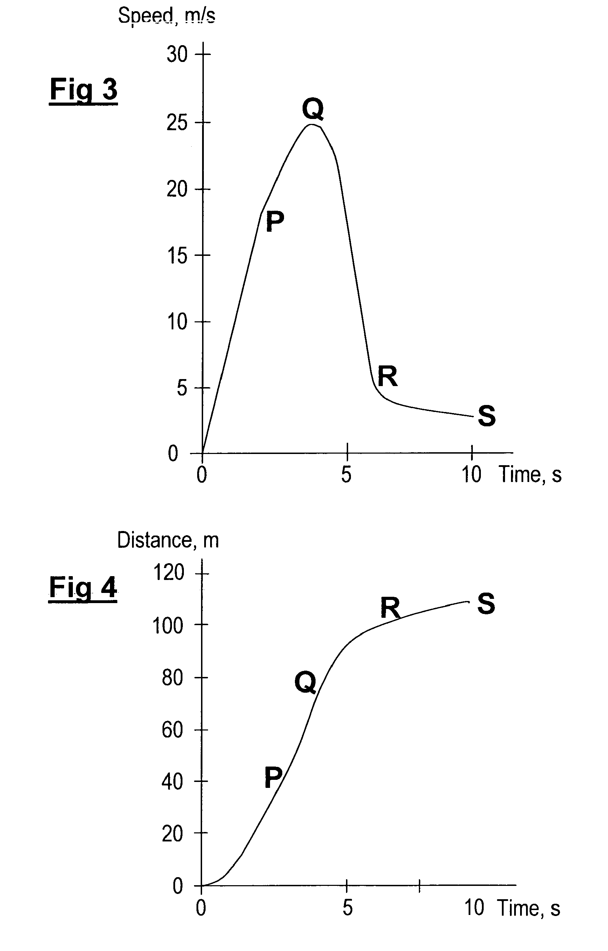

The user's descent profile is illustrated by Figures 3 and 4.

As can be seen from Figure 3 the motor 42 initially drives the spool 40, for a period of about 2s, up to point P. Through this period the motor 42 increases the rate of rotation of the spool 40 substantially linearly and hence the user's descent speed also increases substantially linearly. At point P the descent speed is approximately 18m/s and thus the descent acceleration over the initial 2s period is approximately 9m/s2. This is more than 0.9g, and accordingly the user experiences something very close to free-fall during the initial period. After the initial period the driving force of the motor 42 is progressively reduced down to zero at point Q, and the braking effect of the fan 44 begins to slow the user's acceleration over about another 2s. At point Q the descent speed is about 25m/s and thereafter this is progressively reduced over about another 2s, by the braking effect of the fan 44, down to about 5m/s at point R. Around point R the reducing effective diameter of the spool 40 accelerates the fan 44, increasing the braking effect and further reducing the speed of descent down to a safe landing speed of about 3m/s at the end of the descent indicated by point S.

The points P, Q, R and S are marked on Figure 4, which plots descent distance against time. The user experiences something close to free-fall for the first 40m. This is followed by a moderate slowing for about 45m, after which the fan 44 has its most marked braking effect between points Q and R. At point R the user is only about 12m from the bottom of the descent, and this remaining distance is covered in about 4s.

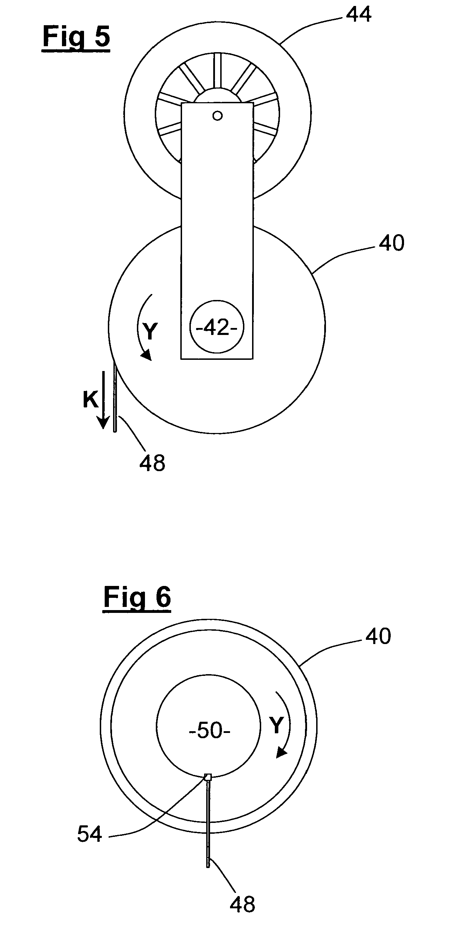

It will be understood that the moment of inertia of the spool 40 will cause it to continue to rotate, at least for a short time, after the user has landed, and it is necessary to prevent this from rewinding the line back up on to the spool 40, which could cause discomfort and possibly harm to the user and would at a minimum have to be freed before the apparatus could be used again. In the present invention such inadvertent rewinding is avoided as shown in Figure 2 by securing the tethered end of the line to a tether 50 rotatably mounted on the same axis 52 as the spool 40. The tether 50 has a one-way locking connection with the spool 40 as will now be described in more detail with reference to Figure 2 together with Figures 5 and 6.

As the line 48 is drawn off in the direction of arrow K it causes the spool 40 to rotate forwards as indicated by arrow Y. The line 48 is laid on the spool 40 in a helical channel which as seen in Figure 2 extends over the tether 50 to the securing attachment 54. As long as there is line on the spool 40, the tether 50 necessarily rotates with the spool 40. However, just before landing, the line 48 comes off the spool 40 and is then attached only to the tether 50. Then the one-way connection between the spool 40 and the tether 50 is such that the spool does not rotate the tether 50 in the forward direction Y. The moment of inertia of the tether 50 is not enough to rewind the line 48 and this therefore simply hangs from the tether 50, which is brought to a halt, as indicated by Figure 6. Meanwhile the spool 40 can continue to rotate forwards under its (high) inertia until it comes to rest.

The known regulating apparatus of Figure 1 has a spring mechanism, indicated at 36 in Figure 1, for rewinding the spool 10 to retrieve the line 24 after a descent. In the apparatus of Figure 2 this retrieval is provided instead by driving the motor 42 in reverse. As the motor 42 is reversed it first of begins to rotate the spool backwards, ie in a direction opposite to that of arrow Y. This continues until the one-way locking connection between the spool 40 and the tether 50 comes into engagement, after which the tether 50 is causes to rotate backwards along with the spool 40 and so the line 48 can be retrieved. The one-way connection is so designer (with a cam or similar means) that the spool 40 and the tether 50 lock to together in only one relative orientation about the axis 42; and in this one orientation, as can be seen from Figure 2, the helical channel in the tether 50 is precisely aligned with the helical channel in the spool 40, and thus the line 48 is rewound precisely as it is retrieved.

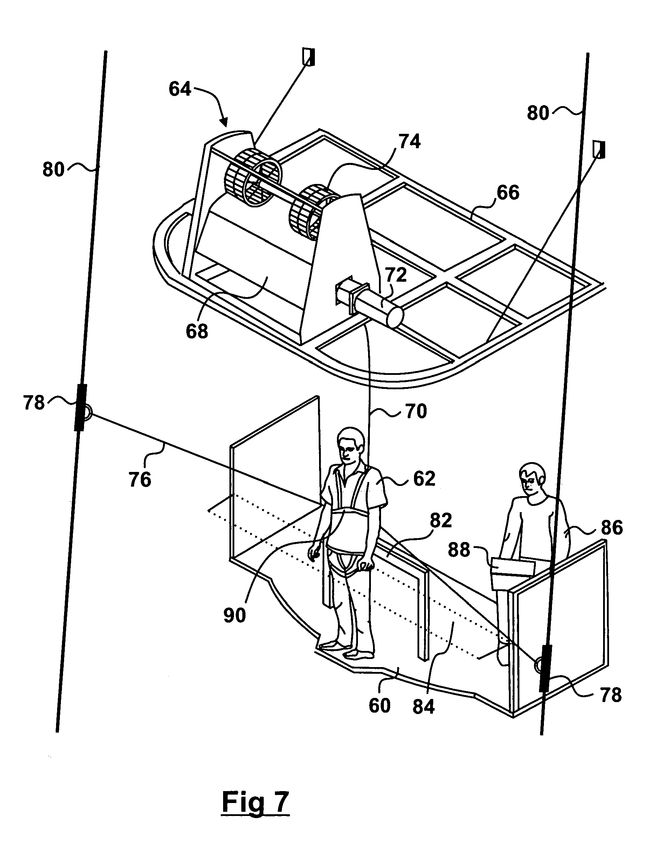

Figure 7 illustrates a descender embodying the present invention. This descender comprises an elevated platform 60 from which a user 62 is to jump. The regulating apparatus 64 for the descent is mounted on a gantry 66 above the platform 60. The regulating apparatus 64 is of the form described above with particular reference to Figure 2, with a spool 68 carrying a control line 70, and an electric motor 72 arranged to provide initial acceleration for the spool 68 and a fan 74 to provide windage braking.

The control line 70 descends from the spool 68 to a harness 90 worn by the user 62. When the user 62 jumps from the edge of the platform 60 the line 70 is paid out by the regulating apparatus 64 to control the descent. Stay wires 76 extend sideways from the user's harness to shuttles 78 mounted for sliding movement on generally vertical stabiliser cables 80 so that the user is not blown off course during the descent.

It will be appreciated from the foregoing description of the regulating apparatus that the motor 72 must begin to accelerate the spool 68 as soon as the user 62 jumps. This is controlled by means of a gate 82 and a sensor in the form of a light curtain extending transversely across the forward part of the platform 60 at about thigh height as indicated in broken lines at 84, both the gate 82 and the sensor 84 being operatively connected to the regulating apparatus 64 in a safely organised manner as will now be described.

First, the regulating apparatus 64 has to be switched on by an authorised operator 86 using a keypad 88 or the like. Second, the gate 82 which controls access is arranged so that the electric motor 72 is enabled only if the main switch is on the gate 82 is properly closed. Third, the electric motor 72 is enabled only if in addition the light curtain 84 detects that a user 62 is in the jumping position at the edge of the platform 60. Only when all these preliminaries have been properly completed can the electric motor 72 be energised to accelerate the spool 68, and this happens as soon as the light curtain 84 detects that the user 62 has jumped off the edge of the platform 60.

It should be pointed out that the gate 82, when closed, prevents the user 62 from moving backwards out of the light curtain to trigger a false actuation of the motor 72. And if the gate 82 is opened, the regulating apparatus is automatically disabled.

Additional safety features include (a) an abort switch manually operable by the operator 86 to cancel enablement of the drive means, for instance if a user has become too nervous to jump, and (b) an emergency switch manually operable to disable regulating apparatus altogether in the event of some unforeseen problem.

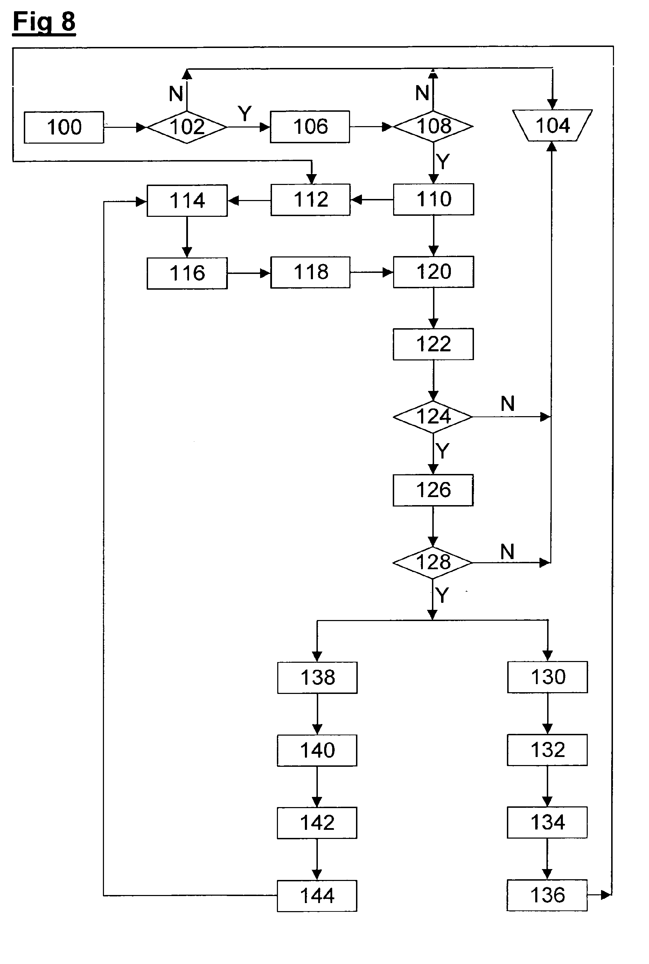

The invention will now be further described with reference to Figure 8, which shows a flow chart for the operation of the descender system.

First, a system operative powers up the system at 100 by means of a master switch.

The operative then checks the system at 102 for illumination of a System-OK light. The procedure can continue only if the System-OK light is ON, as indicated by Y on the flow chart. If it is OFF, indicated by N on the flow chart, the operative must examine the system and take appropriate remedial action as indicated at 104.

Assuming the System-OK light is illuminated, the operative then physically checks that the jump platform is closed off by the gate provided, as indicated at 106. The operative also checks that the Gate-Closed light is illuminated as indicated at 108. The procedure can continue only if the Gate-Closed light is ON, as indicated by Y on the flow chart. If it is OFF, indicated by N on the flow chart, the operative must examine the system and take appropriate remedial action as indicated at 104.

Assuming the Gate-Closed light is ON, the operative now switches the means drive to REWIND, as indicated at 110, after which the system can be homed by means of a wireless controller, as indicated at 112.

The homing operation 112 puts all elements of the system in the correct positions and status for a descent. An operative at the platform can now connect a user to the descent line, by means of a harness on the line, as indicated at 114. After this the drive means is switched to RUN at 116, the platform gate is opened at 118, and at 120 the platform operative guides the user into the correct position on the platform for him to make his descent.

The platform operative then closes the platform gate at 122, and at 124 checks that both the Gate-Closed light and a Light-Curtain light are illuminated. (A light curtain extends transversely across the forward part of the platform. This light curtain is interrupted, causing illumination of the Light-Curtain light, only when the user is correctly positioned for his descent, at the edge of the platform). The user can make his descent only if *both* the Gate-Closed light and the Light-Curtain light are ON, indicated on the flow chart by Y against the check at 124. If *either* the Gate-Closed light or the Light-Curtain light is OFF, indicated by N on the flow chart, the operative must examine the system and take appropriate remedial action as indicated at 104.

Assuming both the Gate-Closed light and the Light-Curtain light are ON, the operative now presses a Start button as indicated at 126 to enable the drive means. The enabled status of the drive means is signalled by a Ready light, as indicated at 128. The system procedure can continue only if the Ready light is ON, as indicated by Y on the flow chart. If it is OFF, indicated by N on the flow chart, the operative must examine the system and take appropriate remedial action as indicated at 104.

Assuming the Ready light is ON, the user can now jump as indicated at 130, the drive means is automatically activated at 132 to drive the spool of the regulator forwards for a predetermined time and under servo control and the user descends. At the end of his descent a ground operative releases the user from the harness at 134 and then switches the drive means back to REWIND at 136. The homing operation 112 then causes the descent line to be rewound upon its spool and otherwise repositions the system for another descent.

Those skilled in the art will appreciate that users will occasionally decide not to make a descent even when they have been harnessed and reached the jump position at the edge of the platform. As will now be described, the system is arranged to allow for this possibility. If, for whatever reason, a user fails as indicated at 138 to jump when expected, an operative presses an Abort button as indicated at 140, to disable the drive means. The operative then opens the gate as indicated at 142. The user is then brought off the platform and the gate closed again, as indicated at 144. The system being already homed, another user can now be harnessed for a descent, as indicated at 114.

A descender according to the invention may include an electronic counter recording the number of descents so that charges to users can be related to the amount of use and maintenance schedules be conveniently maintained.

The electric motor used in the regulating apparatus is a servomotor controlled by vector pulse width modulation (VPWM). A suitable motor is one of the 190U2 range available worldwide from Control Techniques and in the present application is arranged to drive through a 3:1 step-down gearbox also available from Control Techniques under item number SP+180S. However it should be understood that some other drive means (not necessarily an electric motor) may be used in the invention.

Various modifications of the arrangements described may be made without departing from the scope of the invention, and in particular it should be noted that the one-way locking connection hereinbefore described is not necessarily limited to the particular form of regulating apparatus shown herein.

Also, those skilled in the science will appreciate that the invention may be applied to a range of descenders for recreational, educational, training or safety purposes including zip wires or other facilities. Further, whilst the invention has been particularly described as being used by a person who jumps from an elevated platform, is also to be understood that the invention may be adapted to provide safety apparatus for a climber, who can be clipped into the described harness on the ground and then make an ascent (of a tower or climbing wall, say) knowing that he will be lowered safely to the ground if he should fall.

**Claims**

1. A descender including a platform (60) elevated at height h from which a user (62) jumps, attached to a line (48/70), and regulating apparatus (64) for regulating the user's descent from the platform (60), which regulating apparatus comprises a spool (40/68) upon which the line (48/70) is wound before the descent and from which the line (48/70) is drawn off during the descent, thereby rotating the spool (40/68) forwards, and a brake (44/74) operative upon the spool (40/68) to limit its speed of forward rotation and hence the rate of descent, **characterised in that** said descender includes drive means (42/72) operative when enabled to accelerate the spool (40/68) forwards during an initial part of the descent.

2. A descender as claimed in Claim 1 **characterised in that** said regulating apparatus (64) includes a platform monitor (82, 84) operatively connected to the drive means (42/72) so that the drive means (42/72) is not enabled unless the user (62) is properly positioned on the platform (60).

3. A descender as claimed in any Claim 1 or Claim 2 **characterised in that** the drive means (42/72) when enabled accelerates the spool (40/68) forwards as soon as the platform monitor (82,84) detects that the user (62) has left the platform (60).

4. A descender as claimed in any preceding claim **characterised in that** the descender includes an abort control for disabling the drive means (42/72) if a user (62) fails to jump.

5. A descender as claimed in any preceding claim **characterised in that** the drive means (42/72) comprises an electric motor connected to the spool (40/68) and operative under the control of a servomechanism to accelerate the spool forwards for a first predetermined time period $t_1$, wherein $t_1$ is substantially less than $\sqrt{(2h/g)}$ s.

6. A descender as claimed in Claim 5 **characterised in that** $t_1$ is less than $\sqrt{(h/g)}$ s.

7. A descender as claimed in Claim 5 or Claim 6 **characterised in that** the servomechanism is so configured and arranged that the operation of the drive means (42/72) is progressively reduced to zero over a second predetermined time period $t_2$ after $t_1$, wherein $t_2 \approx t_1$.

8. A descender as claimed in any of Claims 5 to 7 wherein the spool (40/68) has a fore section of relatively large diameter **D,** a rear section of relatively small diameter **d** and a tapered section between said fore section and said rear section, **characterised in that** the line (48/70) is helically wound N times on said fore section, where $\mathbf{N = g\ t_1^2/2\pi d}$.

9. A descender as claimed in Claim 8 **characterised in that** the servomechanism is so configured and arranged that the acceleration of the spool (40/68) during said initial part of the descent is less than $\mathbf{g/\pi D}$ **rev/s²** and not less than 0.9g/πD **rev/s²**.

10. A descender as claimed in any of Claims 7 to 9 **characterised in that** the drive means (42/72) is automatically disabled during a descent if (a) the spool (40/68) exceeds a predetermined rate of rotation or (b) the drive means (42/72) attempts to drive the spool backwards or (c) the drive means (42/72) is operative for longer than $t_1 + t_2$.

11. A descender as claimed in any of Claims 8 to 10 **characterised in that** the line (48/70) has one free end connected to a harness for the user and its other end connected by means of a tether (50) to the rear section of the spool (40/68), **characterised in that** the tether (50) has a one-way locking connection with the spool (40/68) such that the spool (40/68) can rotate without rotating the tether (50) whilst the tether (50) cannot rotate without rotating the spool (40/68) and the line (48/70) is of length equal to the height h of the descent so that at the end of the descent the line (48/70) is fully unwound from the spool (40/68) and may then rotate free of the line.

**12.** A descender as claimed in Claim 11 **characterised in that** the tether (50) is rotatable backwards to rotate the spool (40/68) backwards and thereby rewind the line (48/70) upon the spool.

**13.** A descender as claimed in Claim 11 or Claim 12 **characterised in that** the tether (50) locks to the spool (40/68) in only one relative orientation.

**14.** A descender as claimed in Claim 13 **characterised in that** the spool (40/68) and the tether (50) are each formed with a helical channel for the wound line (48/70) and the respective channels are mutually aligned in said one relative orientation.

**15.** A descender as claimed in any of Claims 11 to 14 **characterised in that** the harness is slidingly connected to a guide rig (80) extending downward from said platform to the bottom of the descent.

## Fig 1

## Fig 2

**Fig 3**

**Fig 4**

**Fig 5**

44

40

Y

K

-42-

48

**Fig 6**

40

-50-

Y

54

48

**Fig 7**

## Fig 8

**EUROPEAN SEARCH REPORT**

Application Number

EP 10 25 1147

| | | | |
|---|---|---|---|
| **DOCUMENTS CONSIDERED TO BE RELEVANT** | | | |
| Category | Citation of document with indication, where appropriate, of relevant passages | Relevant to claim | CLASSIFICATION OF THE APPLICATION (IPC) |
| A | US 2 229 201 A (WILLIFORD ET AL) 21 January 1941 (1941-01-21) * page 1, column 2, line 24 - line 31; figures * * page 3, column 1, line 3 - line 7 * ----- | 1-15 | INV. A62B1/12 A63G31/00 B64D23/00 |
| A,D | WO 2007/107746 A1 (DROP ZONE UK LTD [GB]; MORIARTY NICHOLAS [GB]) 27 September 2007 (2007-09-27) * figures * & EP 1 996 296 A (DROP ZONE UK LTD) 3 December 2008 (2008-12-03) ----- | 1-15 | |
| | | | TECHNICAL FIELDS SEARCHED (IPC) |
| | | | A62B A63G B64D |

The present search report has been drawn up for all claims

| Place of search | Date of completion of the search | Examiner |
|---|---|---|
| The Hague | 27 October 2010 | Vervenne, Koen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

**EP 2 266 667 A1**

## ANNEX TO THE EUROPEAN SEARCH REPORT
## ON EUROPEAN PATENT APPLICATION NO.

EP 10 25 1147

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2010

| Patent document cited in search report | | Publication date | Patent family member(s) | | Publication date |
|---|---|---|---|---|---|
| US 2229201 | A | 21-01-1941 | NONE | | |
| WO 2007107746 | A1 | 27-09-2007 | AT | 477837 T | 15-09-2010 |
| | | | AU | 2007228630 A1 | 27-09-2007 |
| | | | EP | 1996296 A1 | 03-12-2008 |
| | | | GB | 2436324 A | 26-09-2007 |
| | | | US | 2007240940 A1 | 18-10-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1996296 A